# EUROPÄISCHE PATENTSCHRIFT

(11) **EP 0 742 765 B1**
(45) Veröffentlichungstag und Bekanntmachung des Hinweises auf die Patenterteilung: **22.04.1998**
(21) Anmeldenummer: 95908929.3
(22) Anmeldetag: 10.02.1995
(51) Int. Cl.: B60T 8/36

(54) **BLOCKIERGESCHÜTZTE BREMSANLAGE**
ANTI-LOCK BRAKING SYSTEM
DISPOSITIF DE FREINAGE A SYSTEME ANTIBLOCAGE

(30) Priorität: 10.02.1994 DE 4404273; 09.09.1994 DE 4432165
(43) Veröffentlichungstag der Anmeldung: 20.11.1996
(73) Patentinhaber: LUCAS INDUSTRIES PUBLIC LIMITED COMPANY, Solihull, West Midlands B91 3TX (GB)
(72) Erfinder: SCHÄFER, Daniel, D-56299 Ochtendung (DE); GILLES, Leo, D-56077 Koblenz (DE)
(74) Vertreter: Schmidt, Steffen J., Dipl.-Ing.
(86) Internationale Anmeldenummer: EP9500493
(87) Internationale Veröffentlichungsnummer: WO9521758

(56) Entgegenhaltungen:
- EP-A- 0 604 111
- WO-A-92/14927
- WO-A-93/08050
- DE-A- 4 001 017
- DE-U- 8 910 805

## Beschreibung

Die Erfindung betrifft eine blockiergeschützte Bremsanlage für ein Fahrzeug mit den Merkmalen des Oberbegriffs des Anspruchs 1, wie sie aus der WO 93/08050 bekannt ist. Aus diesem Dokument ist ein elektrohydraulisches Aggregat zur Druckregelung in Bremsanlagen von Fahrzeugen bekannt, bei dem der Ventilblock mit einem Pumpenmotor für eine Hydraulikflüssigkeit fördernde Pumpe verbunden ist. Bei dieser Anordnung hat der Pumpenmotor jedoch keinen Ansatz, der in eine Ausnehmung in dem Zwischenkörper paßt. Allerdings zeigt dieses Dokument nicht, den Ventilblock mit einem Pumpenmotor für eine Hydraulikflüssigkeit fördernde Pumpe zu verbinden.

Unter einer "blockiergeschützten Bremsanlage" ist hier ein Aggregat zu verstehen, das ein Blockieren gebremster Räder eines Fahrzeuges verhindert und gegebenenfalls auch ein Durchdrehen von angetriebenen Rädern (sogenannte Antriebsschlupfregelung-ASR). Ein solches Aggregat weist zumindest folgende Baugruppen auf: Eine elektronische Steuerung, die üblicherweise einen Rechner enthält, der in Abhängigkeit von gemessenen Daten (wie z.B. Verzögerung- und Beschleunigungswerten der Räder) Befehle zum Steuern der Bremsanlage ableitet, einen Ventilblock, der insbesondere elektromagnetische Ventile für die Steuerung von Hydraulikflüssigkeit in der Bremsanlage aufnimmt, wobei die Ventile entsprechend den vom Rechner erzeugten Befehlen geöffnet bzw. geschlossen werden, und einen Pumpenmotor, der eine Pumpe antreibt, die Hydraulikflüssigkeit zum Hauptbremszylinder und/oder zu den Bremsen der Räder des Fahrzeuges fördert, falls die Ventile entsprechend eingestellt sind.

Die System-Baugruppen Ventilblock, Pumpe und Pumpenmotor werden häufig auch als "Hydraulikaggregat" bezeichnet.

Die vorliegende Anmeldung betrifft die Anordnung, Montage und Verbindung der zusammenwirkenden Baugruppen elektronische Steuerung, Ventilblock, Pumpenmotor und Pumpe.

Der Stand der Technik kennt eine Vielfalt von Anordnungen der genannten Baugruppen einer blockiergeschützten Bremsanlage. Verwiesen wird insbesondere auf die EP-A-0 105 219, DE-A-38 13 138 und DE-A-38 13 139.

Bei der räumlichen Anordnung der oben genannten Bauelemente und ihrer elektrischen und mechanischen Verbindung kommt es wesentlich darauf an, eine möglichst kompakte (raumsparende) Montage zu erreichen. Darüber hinaus sollen aber auch der elektrischen Verbindung dienende Leitungen (insbesondere Kabelbäume) hinsichtlich Umfang und Länge reduziert werden und es muß auch die Montage der Teile möglichst einfach sein. Auch soll die gesamte Anordnung mit möglichst wenig Bauteilen auskommen. Weiterhin soll die Verbindung der einzelnen Bauteile auch elektrisch und mechanisch sicher und wenig störanfällig sein. Der Gegenstand der vorliegenden Erfindung beinhaltet eine Verbesserung hinsichtlich all dieser technischen Probleme.

Die elektrische und mechanische Montage des Pumpenmotors gemäß dem Stand der Technik ist angesichts des oben genannten technischen Aufgabenkomplexes verbesserungswürdig. Dabei ist auch zu beachten, daß mit Blick auf die oben genannte mechanische und insbesondere elektrische Sicherheit der Montage und Verbindung der Baugruppen auch eine Abdichtung der die Bauteile umschließenden Gehäuse erforderlich ist, insbesondere eine Abdichtung gegen Feuchtigkeit, Schmutz etc.

Die EP-A-0 438 553 beschreibt einen Ventilblock, bei dem die Magnetspulen der Ventile auf einem gemeinsamen Kontaktträger zusammengefaßt sind, der auch gemeinsame Steckverbinder zum Verbinden der Magnetspulen mit der elektronischen Steuerung der Bremsanlage enthält. Eine Integration der elektrischen und mechanischen Montage des Pumpenmotors ist aber nicht vorgesehen.

Die Erfindung verbessert eine blockiergeschützte Bremsanlage der eingangs genannten Art (WO 93/08050) mit Blick auf die genannten technischen Probleme durch die im kennzeichnenden Teil des Anspruchs 1 angegebenen Merkmale.

Indem der Pumpenmotor (oder ein den Pumpenmotor aufnehmendes Gehäuse) einen Ansatz aufweist, der paßgenau und formschlüssig in eine Ausnehmung im Zwischenkörper eingeführt ist und der eine elektrische Verbindungsleitung zum Verbinden des Pumpenmotors mit der elektronischen Steuerung enthält, wird gleichzeitig eine mechanische und eine elektrische Verbindung des Pumpenmotors mit der elektronischen Steuerung und auch mit dem Ventilblock erreicht. Der Zwischenkörper dient somit als elektrisches und mechanisches Verbindungselement für alle drei Baugruppen, nämlich die elektronische Steuerung, den Ventilblock und den Pumpenmotor.

In den abhängigen Patentansprüchen sind bevorzugte Ausgestaltungen der blockiergeschützten Bremsanlage beschrieben.

Eine besonders konsequente Anwendung des erfindungsgemäßen Konzepts liegt dann vor, wenn auch der Pumpenmotor und das Gehäuse der elektronischen Steuerung mittels des Zwischenkörpers miteinander verbunden sind.

Erfindungsgemäß ist also vorgesehen, daß die elektronische Steuerung und das Hydraulikaggregat (s.o.) über einen Zwischenkörper verbunden sind, der alle Magnetspulen der Ventile des Hydraulikaggregates trägt. Über Steckkontakte erfolgt eine direkte elektrische Verbindung von einer Leiterplatte der elektronischen Steuerung zu Verbindungsleitungen, die zu den Magnetspulen führen. Diese Verbindungsleitungen sind im Zwischenkörper aufgenommen und dort elektrisch isoliert.

Die erfindungsgemäße Anordnung der Bauteile hat den Vorteil, daß zum Schutz insbesondere der elektronischen Steuerung gegen äußere Einflüsse (Feuchtigkeit, Schmutz etc.) lediglich zwei Abdichtungen erforderlich sind, und zwar eine Dichtung zwischen dem Gehäuse der elektronischen Steuerung und dem Zwischenkörper und eine Dichtung zwischen dem Zwischenkörper und dem Pumpenmotor. Gemäß einer bevorzugten Ausgestaltung ist letzteres eine Dichtung zwischen dem Zwischenkörper und einem Ansatz am Pumpenmotor.

Der für die elektrische und mechanische Verbindung der Bauteile dienende Zwischenkörper kann als kostengünstiges Spritzgußteil aus Kunststoff hergestellt werden, wobei die Magnetspulen gemeinsam mit den elektrischen Leitern umspritzt werden. Dabei können die elektrischen Leiter auch in einfacher Weise als ausgestanztes Gitter hergestellt sein.

Vorteilhaft ist auch, daß die erfindungsgemäße Bremsanlage eine Anordnung der elektronischen Steuerung unterhalb des Hydraulikaggregates ermöglicht. Hierdurch wird eine besonders raumsparende Anordnung der Teile möglich.

Gemäß einer anderen, bevorzugten Ausführungsform der Erfindung weist der Pumpenmotor einen von dem Zwischenkörper unabhängigen (räumlich getrennten) Ansatz auf, der eine elektrische Verbindung zwischen der elektronischen Steuerung und dem Pumpenmotor aufnimmt. Diese Trennung der Verbindung zwischen dem Gehäuse und dem Ventilblock einerseits und dem Gehäuse und dem Pumpenmotor andererseits ermöglicht eine kürzere Leitungsführung und bewirkt eine bessere Entkopplung der jeweiligen Signale. Außerdem kann der Zwischenkörper einfacher gestaltet sein, da er nicht den Ansatz umgreifend ausgeführt ist.

Um eine mechanisch besonders stabile und auch gegen Staub, Feuchtigkeit, Öl etc. sichere Verbindung zwischen dem Gehäuse und dem Ventilblock sowie dem Gehäuse und dem Pumpenmotor zu erhalten, weist das Gehäuse eine erste Aufnahme für den Zwischenkörper und eine zweite Aufnahme für den Ansatz auf. Bei einer besonders bevorzugten Ausführungsform sind die erste Aufnahme und die zweite Aufnahme mit dem Gehäuse staubdicht und/oder hermetisch verbunden.

Des weiteren können die erste und/ oder die zweite Aufnahme mit einer Platine in dem Gehäuse staubdicht und/oder hermetisch verbunden sein. Damit ist eine weitere Erhöhung der Zuverlässigkeit erzielbar.

Die elektrische Verbindung zwischen dem Pumpenmotor und dem Gehäuse der elektronischen Steuerung kann auch in Form von Steckkontakten realisiert sein, wobei dann die zweite Aufnahme Steckkontakte zwischen der elektronischen Steuerung und dem Pumpenmotor aufnimmt.

Vorzugsweise sind die erste und/ oder die zweite Aufnahme jeweils mit einer Dichtung versehen, die eine staubdichte und/oder hermetische Verbindung zwischen dem Ventilblock bzw. dem Pumpenmotor und dem Gehäuse bewirken.

Gemäß einer bevorzugten Ausführungsform sind der Zwischenkörper und/ oder der Ansatz jeweils seitlich neben oder in einer Aussparung einer Stützplatte des Ventilblocks bzw. des Pumpenmotors angeordnet und stellen die Verbindung mit der ersten bzw. der zweiten Aufnahme her. Zusätzlich kann das Gehäuse der elektronischen Steuerung an der Stützplatte beispielsweise durch eine geeignete Schraubverbindung befestigt werden. Dies hat den Vorteil, daß die Gesamtanordnung wesentlich flacher baut als die erste Ausführungsform, da hier die Querabmessung des Zwischenkörpers wegfällt. Außerdem ist die Kühlung verbessert, da das Gehäuse der elektronischen Steuerung direkt mit der wärmeleitenden (metallischen) Stützplatte in Kontakt steht, die wiederum, bedingt durch den Wegfall des Zwischenkörpers, mit dem ebenfalls wärmeleitenden Ventilblock in Kontakt steht.

Bei einer bevorzugten Ausführungsform sind die erste und/ oder die zweite Aufnahme jeweils von einer Dichtung umgeben, die in axialer und in radialer Richtung durch die jeweilige Aufnahme abgestützt sind, und der Zwischenkörper bzw. der Ansatz umgreifen die jeweilige Dichtung.

Weiterhin kann die Stützplatte mit dem Ventilblock und/oder mit dem Pumpenmotor verschraubt sein. Dies kann insbesondere auch durch schraubenartig ausgebildete Dämpferkammerstopfen erfolgen, die ohnehin vorhanden ist, wodurch eine Einsparung an Bauteilen möglich ist. Außerdem kann durch entsprechende Gestaltung des Dämpferkammerstopfens ein größeres Volumen der Dämpferkammer bereitgestellt werden.

Nachfolgend wird ein Ausführungsbeispiel der Erfindung anhand der Zeichnung näher erläutert. Es zeigt:
Fig. 1 schematisch eine Seitenansicht der hier interessierenden Baugruppen einer blockier-geschützten Bremsanlage, teilweise im Schnitt;
Fig.2 eine Draufsicht auf einen Zwischenkörper, der bei einer Anordnung gemäß Fig.1 verwendet wird, wobei die Fig.1 einen Schnitt durch den Zwischenkörper entlang der Linie I-II der Fig.2 darstellt;
Fig. 3 schematisch eine Seitenansicht einer zweiten Ausführungsform im teilweisen Aufriß eines Teils eines Gehäuses, eines Pumpenmotors und eines Ventilblocks;
Fig.4 schematisch eine Seitenansicht der Ausführungsform aus Fig. 3 in gegenüber Fig. 3 vergrößerter Darstellung im teilweisen Aufriß des Gehäuses, des Pumpenmotors und des Ventilblocks;
Fig. 5 schematisch eine Ansicht der Ausführungsform aus Fig. 3 von unten bei von dem Pumpenmotor bzw. Ventilblock abgenommenem Gehäuse.
Fig. 6 schematisch eine seitliche Schnittdarstellung durch eine Dämpferkammer mit eingeschraubtem Dämpferkammerstopfen in gegenüber Fig. 3 vergrößertem Maßstab.

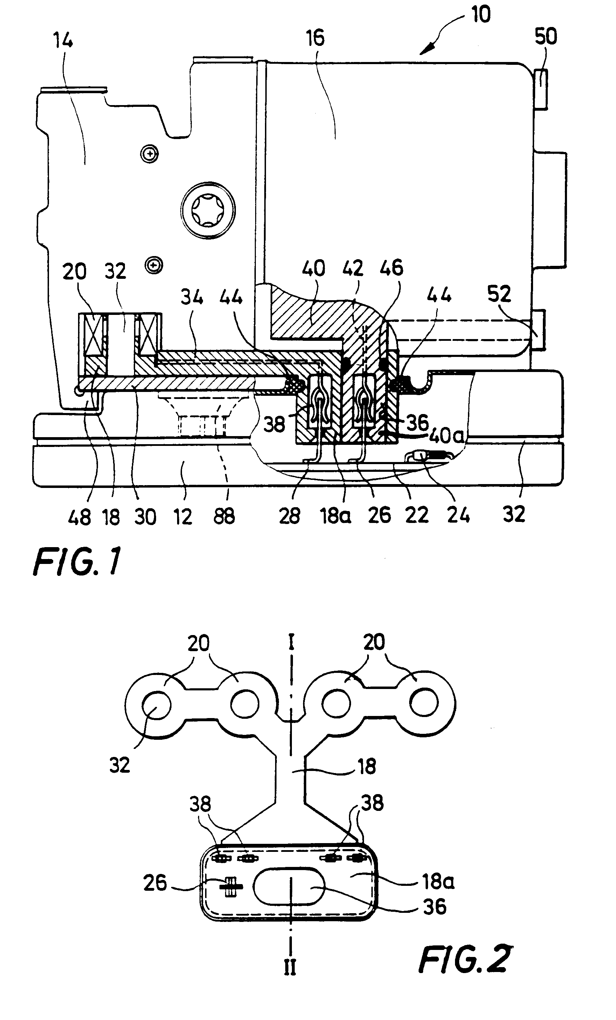

Die Fig.1 zeigt ein Aggregat 10 mit den nachfolgenden Baugruppen einer blockiergeschützten Bremsanlage:

Einer in einem Gehäuse 12 aufgenommenen elektronischen Steuerung der Bremsanlage, wobei die elektronische Steuerung hier nur durch eine Leiterplatte 12 und symbolisch durch ein Schaltungselement 24 angedeutet ist. Einem Ventilblock 14, der die für eine blockiergeschützte Bremsanlage (gegebenenfalls mit ASR) erforderlichen elektromagnetischen Ventile und zugehörige Leitungsteile (die mit einzelnen Radbremsen des Fahrzeuges - nicht gezeigt - verbunden werden) aufnimmt. Und einen Pumpenmotor 16, der eine Pumpe betätigt, die Hydraulikflüssigkeit in an sich bekannter Weise zum Hauptbremszylinder und/oder zu den Radbremsen (nicht gezeigt) fördert. Im dargestellten ersten Ausführungsbeispiel ist die Pumpe (üblicherweise eine Kolbenpumpe) im Ventilblock 14 angeordnet.

Zur elektrischen und mechanischen Verbindung und Montage der genannten Baugruppen 12, 14 und 16 dient ein Zwischenkörper 18 aus Kunststoff. Der Zwischenkörper 18 ist vertikal oberhalb des Gehäuses 12 der elektronischen Steuerung angeordnet und nimmt alle Magnetspulen 20 für die einzelnen elektromagnetischen Ventile des Ventilblockes 14 auf.

Fig.2 zeigt eine Draufsicht auf den Zwischenkörper 18. Danach sind vier Magnetspulen 20 im Zwischenkörper 18 aufgenommen, wobei die Magnetspulen 20 jeweils einen Hohlraum 32 umschließen, in dem das Ventil (nicht gezeigt) oder zumindest ein Bauteil des Ventils (der Anker) angeordnet wird.

Fig.1 zeigt beispielhaft zwei Kontaktstifte 26, 28, die von der Leiterplatte 22 der elektronischen Steuerung aufwärts stehen. In Richtung senkrecht zur Zeichenebene sind mehrere solche elektrischen Kontaktstifte 38 hintereinander angeordnet, wie sich aus Fig.2 ergibt.

Auf dem Gehäuse 12 der elektronischen Steuerung ist eine Stützplatte 30 befestigt, auf der der Zwischenkörper 18 großflächig aufliegt.

Zu jeder der vier Magnetspulen 20 führt eine elektrische Leitung 34, welche die Magnetspule jeweils mit einer Kontaktklemme 38 verbindet. Die Leitungen 34 und die Kontaktklemmen 38 sind im Zwischenkörper 18 aufgenommen, wobei die Kontaktklemmen 38 jeweils in einem Hohlraum im Zwischenkörper 18 angeordnet sind. Der sich horizontal erstreckende Zwischenkörper 18 weist einen Ansatz 18a auf, der sich vertikal nach unten in das Gehäuse 12 der elektronischen Steuerung erstreckt und die Kontaktklemmen 38 aufnimmt. Der Ansatz 18a des Zwischenkörpers 18 weist an seiner unteren Stirnfläche Öffnungen auf, durch die die Kontaktstifte 28 durchschiebbar sind, um mit den Kontaktklemmen 38 in elektrisch leitenden Eingriff zu kommen.

Der Pumpenmotor 16 weist einen Motorblock 40 auf, von dem ein Ansatz 40a vertikal nach unten absteht. Der Ansatz 40a des Motorblocks greift paßgenau in eine Ausnehmung 36 ein, die im Zwischenkörper 18 ausgeformt ist (vgl. auch Fig.2). Im Ansatz 40a des Motorblockes 40 ist eine Kontaktklemme aufgenommen, die ähnlich den oben beschriebenen Kontaktklemmen der Magnetspulen einen Kontaktstift 26 der elektronischen Steuerung aufnimmt, um eine elektrische Verbindung zwischen der elektronischen Steuerung und dem Pumpenmotor 16 herzustellen. Der Ansatz 40a bewirkt auch eine mechanische Befestigung des Pumpenmotors 16 an allen übrigen Baugruppen, und zwar über die Ausnehmung 36 im Zwischenkörper 18. Mittels eines O-Ringes 46 sind das Innere des Pumpenmotors und des Gehäuses 12 der elektronischen Steuerung gegen äußere Einflüsse abgedichtet. Es ist nur eine einzige weitere Dichtung 44 erforderlich, um auch eine Abdichtung des Gehäuses 12 und auch der eventuell störanfälligen Teile des Zwischenkörpers gegen äußere Einflüsse zu erreichen.

Der Pumpenmotor 16 ist mittels zweier Schraubenbolzen 50, 52 am Ventilblock 14 befestigt.

Mit einer Nase 48 umgreift der Ventilblock 14 die Stützplatte 30, an der das Gehäuse 12 der elektronischen Steuerung befestigt ist. Durch zusätzliche Verschraubung mittels eines entsprechend ausgebildeten Dämpferkammerstopfens 88 erfolgt eine sichere mechanische Befestigung des Gehäuses 12 am Ventilblock 14.

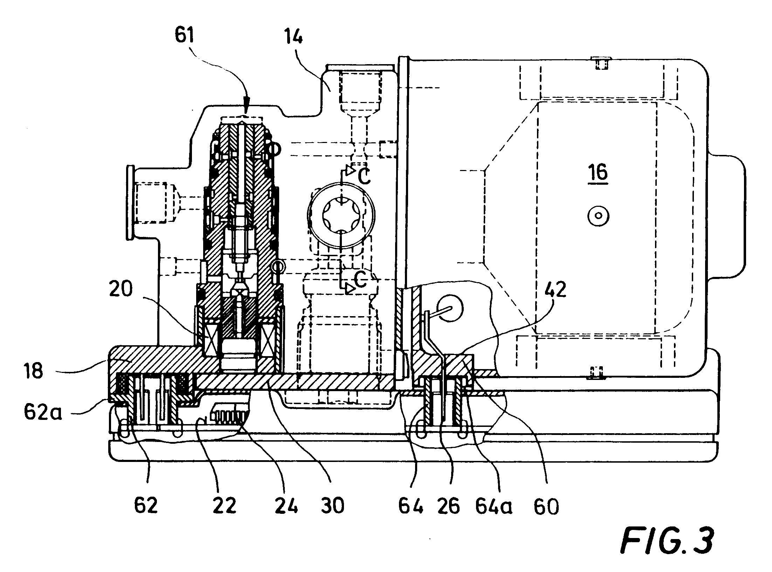

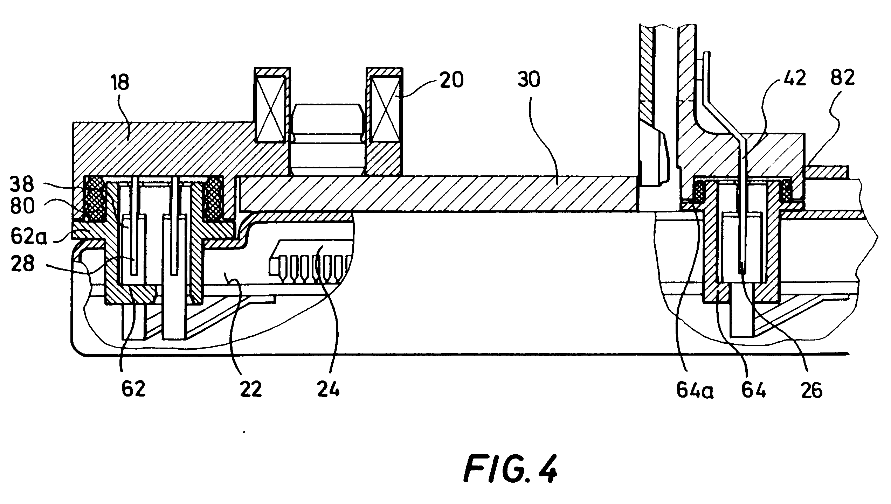

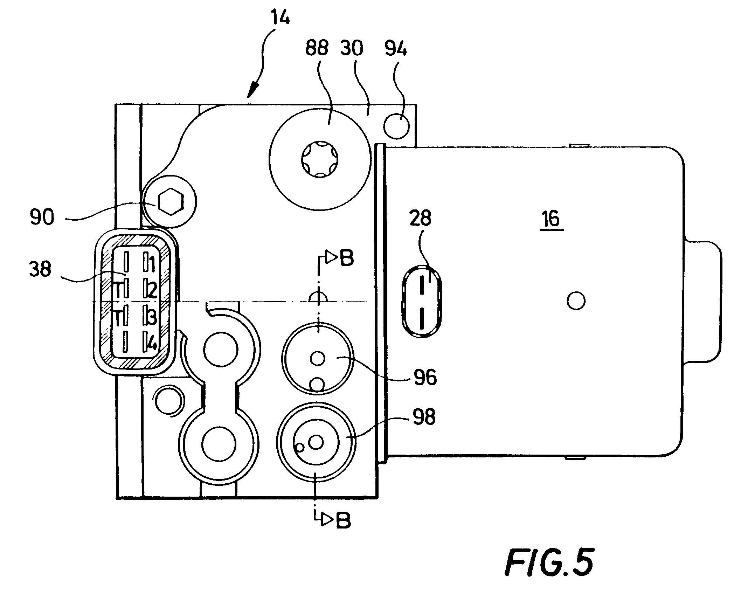

In den Fig. 3 bis 6 ist eine weitere Ausführungsform der Erfindung veranschaulicht. Dabei sind gegenüber den Fig. 1 und 2 gleiche Teile und Baugruppen mit gleichen Bezugszeichen versehen und nicht nochmals im Detail erläutert.

Hierbei weist der Pumpenmotor 16 einen von dem Zwischenkörper 18 unabhängigen Ansatz 60 auf, der eine elektrische Verbindung in Form von Stecker- und Buchsenkontakten 26, 42 zwischen der elektronischen Steuerung 22, 24 und dem Pumpenmotor 16 aufnimmt. Der Ansatz 60 ist von dem Zwischenkörper 18 räumlich getrennt und ragt direkt von dem Pumpenmotor 14 weg. In gleicher Weise ist bei dieser Ausführungsform der Zwischenkörper 18 an dem Ventilblock 14 abstehend angeordnet. Der Zwischenkörper 18 nimmt dabei Teile der Elektromagnet-Spulen 20 der Ventile 61 auf und erstreckt sich seitlich an der Stützplatte 30 vorbei zu einer ersten Aufnahme 62 für den Zwischenkörper 18, der an dem Gehäuse 12 angeordnet ist. In gleicher Weise erstreckt sich auf der anderen Seite der Ansatz 60 seitlich an der Stützplatte 30 vorbei zu einer zweiten an dem Gehäuse 12 angeordneten Aufnahme 64 für den Ansatz 60.

Die erste Aufnahme 62 und die zweite Aufnahme 64 sind durch Verkleben, Vergießen oder dergl. mit dem Gehäuse 12 staubdicht und hermetisch verbunden. Außerdem sind die erste und die zweite Aufnahme 62, 64 mit einer Platine 22 in dem Gehäuse 12 staubdicht und hermetisch verbunden.

Die erste und die zweite Aufnahme 62 und 64 haben jeweils einen seitlich abstehenden, umlaufenden Bund 62a, 64a, der jeweils eine Formdichtung 80, 82 abstützt, die den freien Rand der ersten und der zweiten Aufnahme 62 und 64 umgibt. So wird eine staubdichte und hermetische Verbindung zwischen dem Ventilblock 14 bzw. dem Pumpenmotor 16 und dem Gehäuse 12 bewirkt.

Alternativ können der Zwischenkörper 18 der Ansatz 60 auch in einer Aussparung der Stützplatte 30 des Ventilblocks 14 bzw. des Pumpenmotors 16 angeordnet sein und die Verbindung mit der ersten bzw. der zweiten Aufnahme 62, 64 herstellen.

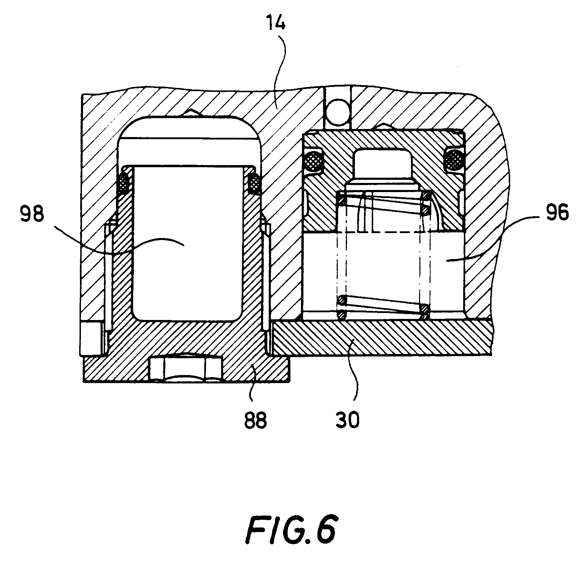

Die Stützplatte 30 ist am Ventilblock 14 befestigt (siehe Fig. 3 bis 6). Dazu ist die Stützplatte 30 mit einem schraubenartig ausgebildeten Dämpferkammerstopfen 88 gegen den Ventilblock 14 geschraubt. Zusätzlich kann eine Schraube 90 vorgesehen sein, die die Stützplatte 30 hält. Auch wäre eine Befestigung der Stützplatte 30 mit dem Pumpenmotor 16 in Erwägung zu ziehen. Eine Durchgangsbohrung 94 dient dazu, ein Verschrauben des Gehäuses 12 der elektronischen Steuerung mit der Stützplatte 30 zu ermöglichen. Fig. 6 zeigt den Querschnitt durch eine Expanderkammer 96 und eine Dämpferkammer 98 mit darin eingesetztem Dämpferkammerstopfen 80.

Durch die erfindungsgemäße Ausgestaltung werden das Wärmeableitverhalten, die Montier- und Austauschbarkeit der elektronischen Steuerung, die Störungsanfälligkeit verbessert und der erforderliche Einbauraum verringert.

## Patentansprüche

1. Blockiergeschützte Bremsanlage für ein Fahrzeug
- mit einer in einem Gehäuse (12) angeordneten elektronischen Steuerung (22, 24),
- einem Ventilblock (14) zur Aufnahme von elektromagnetischen Ventilen für die Steuerung von Hydraulikflüssigkeit in der Bremsanlage,
- einem Pumpenmotor (16) für eine Hydraulikflüssigkeit fördernde Pumpe, der einen Ansatz (40a) aufweist,
gekennzeichnet durch
- einen Zwischenkörper (18), der zwischen dem Ventilblock (14) und dem Gehäuse (12) der elektronischen Steuerung angeordnet ist und die Magnetspulen (20) der Ventile, elektrische Verbindungen (34), eine den Ansatz aufnehmende Ausnehmung (36) sowie elektrische Kontakte (38) aufweist, und
- der den Ventilblock (14), den Pumpenmotor (16) und die elektronische Steuerung (22, 24) mit ihrem Gehäuse (12) elektrisch und mechanisch einander zuordnet.

2. Bremsanlage nach Anspruch 1,
dadurch **gekennzeichnet,** daß die elektrischen Verbindungsmittel Steckkontakte (26, 28) aufweisen.

3. Bremsanlage nach einem der vorhergehenden Ansprüche,
dadurch **gekennzeichnet,** daß der Zwischenkörper (18) aus Kunststoff besteht, in das die Magnetspulen (20) und elektrische Verbindungsmittel (34) eingegossen oder eingespritzt sind.

4. Bremsanlage nach einem der vorhergehenden Ansprüche,
dadurch **gekennzeichnet,** daß der Ventilblock (14) und der Pumpenmotor (16) vertikal oberhalb des Gehäuses (12) der elektronischen Steuerung (22, 24) angeordnet sind.

5. Bremsanlage nach Anspruch 1,
dadurch **gekennzeichnet,** daß der Pumpenmotor (16) einen von dem Zwischenkörper (18) unabhängigen Ansatz (60) aufweist, der eine elektrische Verbindung (26, 42) zwischen der elektronischen Steuerung (22, 24) und dem Pumpenmotor (16) aufnimmt.

6. Bremsanlage nach Anspruch 5,
dadurch **gekennzeichnet,** daß das Gehäuse (12) eine erste Aufnahme (62) für den Zwischenkörper (18) und eine zweite Aufnahme (64) für den Ansatz (60) aufweist.

7. Bremsanlage nach Anspruch 6,
dadurch **gekennzeichnet,** daß die erste Aufnahme (62) und/oder die zweite Aufnahme (64) mit dem Gehäuse (12) staubdicht und/oder hermetisch verbunden sind.

8. Bremsanlage nach Anspruch 6,
dadurch **gekennzeichnet,** daß die erste und/oder die zweite Aufnahme (62, 64) mit einer Platine (22) in dem Gehäuse (12) staubdicht und/oder hermetisch verbunden sind.

9. Bremsanlage nach einem der Ansprüche 7 bis 8,
dadurch **gekennzeichnet,** daß die zweite Aufnahme (64) Steckkontakte (66) zwischen der elektronischen Steuerung (22, 24) und dem Pumpenmotor (16) aufnimmt.

10. Bremsanlage nach Anspruch 6,
dadurch **gekennzeichnet,** daß die erste und/oder die zweite Aufnahme (62, 64) jeweils mit einer Dichtung (80, 82) versehen sind, die eine staubdichte und/ oder hermetische Verbindung zwischen dem Ventilblock (14) bzw. dem Pumpenmotor (16) und dem Gehäuse (12) bewirken.

11. Bremsanlage nach Anspruch 10,
dadurch **gekennzeichnet,** daß der Zwischenkörper (18) und/ oder der Ansatz (60) jeweils seitlich neben oder in einer Aussparung einer Stützplatte (30) des Ventilblocks (14) bzw. des Pumpenmotors (16) angeordnet sind und die Verbindung mit der ersten bzw. der zweiten Aufnahme (62, 64) herstellen.

12. Bremsanlage nach einem der Ansprüche 6 bis 11,
dadurch **gekennzeichnet,** daß die erste und/oder die zweite Aufnahme (62, 64) jeweils von einer Dichtung (80, 82) umgeben sind, die axial und radial durch die jeweilige Aufnahme (62, 64) abgestützt sind, und der Zwischenkörper (18) bzw. der Ansatz (60) die jeweilige Dichtung (80, 82) umgreifen.

13. Bremsanlage nach einem der Ansprüche 11 bis 12,
dadurch **gekennzeichnet,** daß die Stützplatte (30) am Ventilblock (14) und/oder am Pumpenmotor (16) befestigt ist.

14. Bremsanlage nach Anspruch 13,
dadurch **gekennzeichnet,** daß die Stützplatte (30) am Ventilblock (14) mittels eines Dämpferkammerstopfens (88) angeschraubt ist.

15. Bremsanlage nach Anspruch 14,
dadurch **gekennzeichnet,** daß das Gehäuse (12) der elektronischen Steuerung an der Stützplatte (30) befestigt ist.

16. Bremsanlage nach einem der vorhergehenden Ansprüche,
dadurch **gekennzeichnet,** daß das Gehäuse (12) der elektronischen Steuerung (22, 24) durch eine an dem Ventilblock (14) angeformte Nase (48) mechanisch gesichert ist.

## Claims

1. A block-protected braking system for vehicles, comprising
- an electronic controller (22, 24) arranged in a housing (12),
- a valve block (14) to accommodate solenoid valves for controlling the hydraulic fluid in the braking system,
- a pump motor (16) for a pump which delivers hydraulic fluid and which comprises a shoulder (40a),
characterized by
- an intermediate body (18) which is arranged between the valve block (14) and the housing (12) of the electronic controller and which comprises the solenoids (20) of the valves, electric connections (34), a recess (36) for accommodating the shoulder and electric contacts (38), and
- which electrically and mechanically associates the valve block (14), the pump motor (16) and the electronic controller (22, 24) with its housing (12) to each other.

2. A braking system according to claim 1,
characterized in that the electric connecting means comprise plug and socket contacts (26, 28).

3. A braking system according to one of the previous claims,,
characterized in that the intermediate body (18) consists of plastic material into which the solenoids (20) and electrical connecting means (34 are potted or embedded by injection moulding.

4. A braking system according to one of the previous claims,
characterized in that the valve block (14) and the pump motor (16) are arranged vertically above the housing (12) of the electronic controller (22, 24).

5. A braking system according to Claim 1,
characterized in that the pump motor (16) comprises a shoulder (60) which is independent of the intermediate body (18) and which accommodates an electric connection (26, 42) between the electronic controller (22, 24) and the pump motor (16).

6. A braking system according to Claim 5,
characterized in that the housing (12) comprises a first support (62) for the intermediate body (18) and a second support (64) for the shoulder (60).

7. A braking system according to Claim 6,
characterized in that the first support (62) and/or the second support (64) are connected with the housing (12) in a dustproof and/or hermetically sealed manner.

8. A braking system according to Claim 6,
characterized in that the first and/or the second support (62, 64) are connected with a printed circuit board (22) in the housing (12) in a dustproof and/or hermetically sealed manner.

9. A braking system according to one of Claims 7 to 8,
characterized in that the second support (64) accommodates plug and socket contacts (66) between the electronic controller (22, 24) and the pump motor (16).

10. A braking system according to Claim 6,
characterized in that the first and/or the second support (62, 64) are provided with a seal (80, 82) each which effects a dustproof and/or hermetically sealed connection between the valve block (14) or the pump motor (16) and the housing (12), respectively.

11. A braking system according to Claim 10,
characterized in that the intermediate body (18) and/or the shoulder (60) each are arranged laterally adjacent to or in a recess of a supporting plate (30) of the valve block (14) or the pump motor (16), respectively, and provide for the connection with the first or the second support (62, 64).

12. A braking system according to one of Claims 6 to 11,
characterized in that the first and/or the second support (62, 64) each are surrounded by a seal (80, 82) which axially and radially bears upon the respective support (62, 64), and the intermediate body (18) or the shoulder (60), respectively, encompass the respective seal (80, 82).

13. A braking system according to one of Claims 11 or 12,
characterized in that the supporting place (30) is attached to the valve block (14) and/or the pump motor (16).

14. A braking system according to Claim 13,
characterized in that the supporting plate (30) is screwed to the valve block (14) by means of a dampening chamber plug (88).

15. A braking system according to Claim 14,
characterized in that the housing (12) of the electronic controller is attached to the supporting plate (30).

16. A braking system according to one of the previous claims,
characterized in that the housing (12) of the electronic controller (22, 24) is mechanically secured by means of a nose (48) formed at the valve block (14).

## Revendications

1. Système de freinage pour véhicule
- comprenant une commande électronique (22, 24) disposée dans un boîtier (12),
- un bloc de distribution et de régulation (14) destiné à recevoir des soupapes électromagnétiques pour la distribution du fluide hydraulique dans le système de freinage,
- un moteur de pompe (16) pour une pompe refoulant le fluide hydraulique, qui présente un appendice (40a), caractérisé par
- un corps intermédiaire (18) qui est disposé entre le bloc de distribution et de régulation (14) et le boîtier (12) de la commande électronique et présente les bobines d'électroaimant (20) des soupapes, des connexions électriques (34), un logement recevant l'appendice (36) ainsi que des contacts électriques (38), et
- qui associe électriquement et mécaniquement les uns aux autres le bloc de distribution et de régulation (14), le moteur de pompe (16) et la commande électronique (22, 24) avec son boîtier (12).

2. Système de freinage selon la revendication 1,
caractérisé en ce que les moyens de connexion électrique présentent des contacts à fiches (26, 28).

3. Système de freinage selon l'une quelconque des revendications précédentes,
caractérisé en ce que le corps intermédiaire (18) est en matière synthétique dans laquelle sont noyés par coulée ou par projection les bobines d'électroaimants (20) et les moyens de connexion électrique (34).

4. Système de freinage selon l'une quelconque des revendications précédentes,
caractérisé en ce que le bloc de distribution et de régulation (14) et le moteur de pompe (16) sont disposés verticalement au dessus du boîtier (12) de la commande électronique (22, 24).

5. Système de freinage selon la revendication 1,
caractérisé en ce que le moteur de pompe (16) présente un appendice (60) indépendant du corps intermédiaire (18), qui reçoit une connexion électrique (26, 42) entre la commande électronique (22, 24) et le moteur de pompe (16).

6. Système de freinage selon la revendication 5,
caractérisé en ce que le boitier (12) présente un premier logement (62) pour le corps intermédiaire (18) et un deuxième logement (64) pour l'appendice (60).

7. Système de freinage selon la revendication 6,
caractérisé en ce que le premier logement (62) et/ou le deuxième logement (64) sont reliés de façon étanche à la poussière et/ou hermétique.

8. Système de freinage selon la revendication 6,
caractérisé en ce que le premier et/ou le deuxième logement (62, 64) sont reliés de façon étanche à la poussière et/ou hermétique à une platine (22) dans le boîtier (12).

9. Système de freinage selon l'une des revendications 7 à 8,
caractérisé en ce que le deuxième logement (64) reçoit des contacts à fiches (66) entre la commande électronique (22, 24) et le moteur de pompe (16).

10. Système de freinage selon la revendication 6,
caractérisé en ce que le premier et/ou le deuxième logement (62, 64) sont respectivement pourvus d'un joint d'étanchéité (80, 82) qui réalise une liaison étanche à la poussière et/ou hermétique entre le bloc de distribution et de régulation (14) respectivement le moteur de pompe (16) et le boîtier (12).

11. Système de freinage selon la revendication 10,
caractérisé en ce que le corps intermédiaire (18) et/ou l'appendice (60) sont disposés chacun latéralement à côté d'un ou dans un évidement d'une plaque d'appui (30) du bloc de distribution et de régulation (14) respectivement du moteur de pompe (16) et établissent la communication avec le premier respectivement le deuxième logement (62, 64).

12. Système de freinage selon l'une quelconque des revendications 6 à 11,
caractérisé en ce que le premier et/ou le deuxième logement (62, 64) sont respectivement entourés d'un joint d'étanchéité (80, 82) qui est supporté axialement et radialement par le logement (62, 64) respectif et le corps intermédiaire (18) respectivement l'appendice (60) enveloppe le joint d'étanchéité (80, 82) respectif.

13. Système de freinage selon l'une des revendications 11 à 12,
caractérisé en ce que la plaque d'appui (30) est fixée au bloc de distribution et de régulation (14) et/ou au moteur de pompe (16).

14. Système de freinage selon la revendication 13,
caractérisé en ce que la plaque d'appui (30) est fixée par vissage au bloc de distribution et de régulation (14) au moyen d'un bouchon de chambre d'amortissement (88).

15. Système de freinage selon la revendication 14,
caractérisé en ce que le boîtier (12) de la commande électronique est fixé à la plaque d'appui (30).

16. Système de freinage selon l'une quelconque des revendications précédentes,
caractérisé en ce que le boîtier (12) de la commande électronique (22, 24) est immobilisé mécaniquement par un talon (48) formé sur le bloc de distribution et de régulation (14).
